(19) Europäisches Patentamt
European Patent Office
Office européen des brevets

(11) **EP 4 174 751 A1**

(12) **EUROPEAN PATENT APPLICATION**

(43) Date of publication:
**03.05.2023 Bulletin 2023/18**

(21) Application number: **22191438.5**

(22) Date of filing: **22.08.2022**

(51) International Patent Classification (IPC):
**G06Q 40/08** (2012.01)   **G06Q 50/02** (2012.01)

(52) Cooperative Patent Classification (CPC):
**G06Q 40/08; G06Q 50/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2021 IN 202121049259**

(71) Applicant: **Tata Consultancy Services Limited Maharashtra (IN)**

(72) Inventors:
• **SAKKAN, MARIAPPAN**
  **600113 Tamil Nadu, Chennai (IN)**

• **MOHITE, JAYANTRAO**
  **400601 Thane West (IN)**
• **PAPPULA, SRINIVASU**
  **500081 Hyderabad (IN)**
• **SIVALINGAM, RAVINKUMAR**
  **600113 Tamil Nadu, Chennai (IN)**
• **SARANGI, SANAT**
  **400601 Thane West (IN)**
• **SAWANT, SURYAKANT ASHOK**
  **400601 Thane (IN)**
• **MOHAN, SANTOSH KUMAR**
  **600113 Tamil Nadu, Chennai (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHODS AND SYSTEMS FOR ASSESSING MORAL HAZARD AND ADVERSE SELECTION IN AGRICULTURAL INSURANCE**

(57)    This disclosure relates generally to automated methods and systems for assessing moral hazard and adverse selection in agricultural insurance that assist an insurer, re-insurer by generating recommendations for adoption of crop protocols using the dynamic Crop Protocol (DFI) engine of insurance companies during the crop cycle (CP). A moral score is computed based on an adoption index, a crop health index and a weather index. The moral hazard score is further used to dynamically determine a moral hazard level that indicates a correlation between one or more parameters derived from the acquired data and classified as low, moderate, and high based on the correlation. The method of present disclosure aids to under-write the insurance and associated risk based policy effectively and efficiently for determining eligible claim pay out to minimize manual error and mitigate faulty loss assessment.

200

| |
|---|
| Acquiring in real time, via one or more processors, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance. — 202 |
| Computing, via the one or more processors, a moral hazard score based on one or more variables derived from the acquired data, wherein the one or more variables include an adoption index, a crop health index and a weather index. — 204 |
| Dynamically determining, via the one or more processors, a moral hazard level of one or more persons insured with the agricultural insurance based on the moral hazard score, wherein the moral hazard level indicates a correlation between one or more parameters derived from the acquired data and classified as low, moderate, and high based on the correlation — 206 |
| Identifying, via the one or more processors, existence of an adverse selection for the one or more persons insured with the agricultural insurance based on the dynamically determined moral hazard level and one or data more parameters associated with the remotely sensed data acquired using the one or more aerial vehicles — 208 |

**FIG. 2**

EP 4 174 751 A1

**Description**

CROSS-REFERENCE TO RELATED APPLICATIONS AND PRIORITY

The present application claims priority from Indian patent application, Application No. 202121049259, filed in India on October 28th, 2021.

TECHNICAL FIELD

The disclosure herein generally relates to agricultural insurance, and, more particularly, to methods and systems for assessing moral hazard and adverse selection in agricultural insurance.

BACKGROUND

An agricultural insurance scheme is difficult and complex to execute. Specifically, crop insurance would have to reach out to a majority of farmers to become a meaningful policy risk management tool. However, lack of data on yield levels as well as risk position of individual farmers puts insurance companies in a disadvantageous position. Further, high premium rates discourage majority participation and only high risk clients participate, leading to high adverse selection. Thus, traditional agricultural insurance approaches involve manual intervention and result in financial failures due to high adverse selection and moral hazard problems.

SUMMARY

Embodiments of the present disclosure present technological improvements as solutions to one or more of the above-mentioned technical problems recognized by the inventors in conventional systems. For example, in one embodiment, a system for assessing moral hazard and adverse selection in agricultural insurance is provided. The system comprising a memory storing instructions; one or more communication interfaces; and one or more hardware processors coupled to the memory via the one or more communication interfaces, wherein the one or more hardware processors are configured by the instructions to: acquire in real time, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance; compute, a moral hazard score based on one or more variables derived from the acquired data, wherein the one or more variables include an adoption index, a crop health index and a weather index; dynamically determine, a moral hazard level of one or more persons insured with the agricultural insurance based on the moral hazard score, wherein the moral hazard level indicates a correlation between one or more parameters derived from the acquired data and classified as low, moderate, and high based on the correlation; and identify existence of an adverse selection for the one or more persons insured with the agricultural insurance based on the dynamically determined moral hazard level and one or more data parameters associated with the remotely sensed data acquired using the one or more aerial vehicles.

In an embodiment, the system further comprising determining a risk factor and a claim amount associated with the agricultural insurance of the agricultural unit based on the moral hazard level and the adverse selection.

In another aspect, a processor implemented method for agricultural insurance is provided. The method comprising acquiring in real time, via one or more processors, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance; computing, via the one or more processors, a moral hazard score based on one or more variables derived from the acquired data, wherein the one or more variables include an adoption index, a crop health index and a weather index; dynamically determining, via the one or more processors, a moral hazard level of one or more persons insured with the agricultural insurance based on the moral hazard score, wherein the moral hazard level indicates a correlation between one or more parameters derived from the acquired data and classified as low, moderate, and high based on the correlation; and identifying, via the one or more processors, existence of an adverse selection for the one or more persons insured with the agricultural insurance based on the dynamically determined moral hazard level and one or data more parameters associated with the remotely sensed data acquired using the one or more aerial vehicles.

In an embodiment, the processor implemented method for agricultural insurance further comprising determining a risk factor and a claim amount associated with the agricultural insurance of the agricultural unit based on the moral hazard level and the adverse selection.

In yet another aspect, a non-transitory computer readable medium is provided. The non-transitory computer readable medium comprising: acquiring in real time, via one or more processors, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance; computing, via the one or more processors, a moral hazard score based on one or more variables derived from the acquired data, wherein the one or more variables include an adoption index, a crop health index and a weather index; dynamically determining, via the one or more processors, a moral hazard level of one or more persons insured with the agricultural insurance based on the moral hazard score, wherein the moral hazard level indicates a correlation between one or more parameters derived from the acquired data and classified as low, moderate, and high based on the correlation; and identifying, via the one or more processors, existence of an adverse selection for the one or more persons insured with the agricultural insurance based on the dynamically determined moral hazard level and one or data more parameters associated with the remotely sensed data acquired using the one or more aerial vehicles.

In an embodiment, the non-transitory computer readable medium further comprising determining a risk factor and a claim amount associated with the agricultural insurance of the agricultural unit based on the moral hazard level and the adverse selection.

In an embodiment, the weather index is indicative of presence of weather induced pest and diseases in the agricultural unit.

In an embodiment, the adverse selection is indicative of a compliant or a non-compliant status of the predefined recommended agricultural practices of the agricultural insurance units.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for assessing moral hazard and adverse selection in agricultural insurance according to some embodiments of the present disclosure.

FIG. 2 is an exemplary flow diagram illustrating a method for assessing moral hazard and adverse selection in agricultural insurance according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

The agricultural insurance is a mechanism to protect farmers against the uncertainties of crop production, due to natural factors beyond the farmers control. Agricultural insurance programme is administered through rural agricultural bank branch network in each state and department and block (group of villages). Actual area yields are established through sample crop cutting experiment (CCE). This is a major and costly exercise and suffers from delays in processing results. Indemnity payments are therefore often delayed for six months or more. Traditionally, dynamic agriculture technology adoption is not considered by insured farmers during life cycle of crops. Further, state of the art methods do not provide a solution to assess moral hazard and adverse selection in agricultural insurance associated with insured farmers. The typical interpretation of results obtained from conventional agricultural insurance methods has been modified to solve a problem of moral hazard and adverse selection in an automated manner. Risk of Moral hazard occurs when an insured deliberately alters their behavior to increase the magnitude of potential loss. It is observed that the moral hazard incentive leads insured farmers to use fewer chemical inputs poor quality seeds or plant on marginal lands that are not suitable for certain crops thus making their crops less resilient and productive.

The present disclosure is directed to methods and systems for assessing moral hazard and adverse selection in agricultural insurance associated with insured farmers by aggregating data that significantly influence individual claim pay out by insurers. This helps in selection of a farmer for efficient underwriting of insurance policy by the insurance company on real time basis. Assessment of the moral hazard and the adverse selection, of the insured farmers, involves adoption of crop protocols recommended by dynamic crop protocol (DFI) engine of insurance companies during the crop cycle (CP) is used. The moral hazard of the insured farmers is monitored on real time basis by deriving insights from satellite data during the crop critical growth stage. The satellite data could be captured using satellite data sources such as Sentinel 1, 2, Landsat 5,7,8, MODIS, LANDSAT and/or the like are also used. Further, the crop critical growth stage includes crop health indices, weather indices and climatic conditions of agricultural units. In an embodiment, a moral hazard level of the insured farmers is determined with help of crop health indicators such as Normalized Difference Vegetative Index (NDVI), Relative Vegetative Index (RVI), crop phenological characters and their relationship with weather parameters to classify farmer compliance. Further, a method for identifying adverse selection of the agricultural unit or farm or the insured farmer is provided. The adverse selection is identified using geographic information system (GIS) and the moral hazard level information on the agricultural insurance unit which derives insights from satellite data by obtaining geo reference characters. Based on a geo location of a farm and location wise geographical risk, system would recommend customized crop protocol to the insured to mitigate the risk associated with insurance unit.

In the context of the present disclosure, the expression 'adverse selection' refers to a situation with voluntary participation of clients where if premium rates are high (or perceived high), participation of majority of client is discouraged and only high-risk clients participate. Further, the risk is not sufficiently diversified relative to expected payouts. pooled over. The expression 'moral hazard' refers to temptation of an insured individual to take less care in preventing a loss than an uninsured counterpart when expected indemnity. Although further description of the present disclosure is directed to agriculture insurance, it may be noted that the described application is non-limiting and methods and systems of the present disclosure may be applied in any domain, where the insurance and associated risk-based policy is required to be written effectively and efficiently to mitigate faulty loss assessment and avoid higher or lesser pay out to the insured farmers.

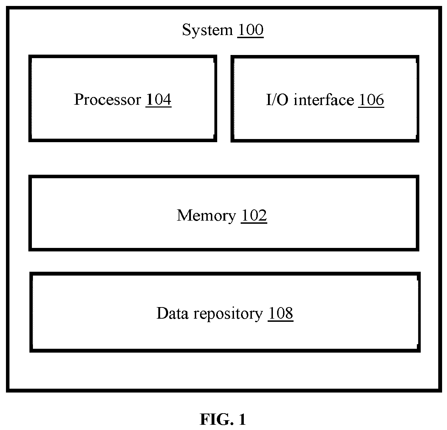

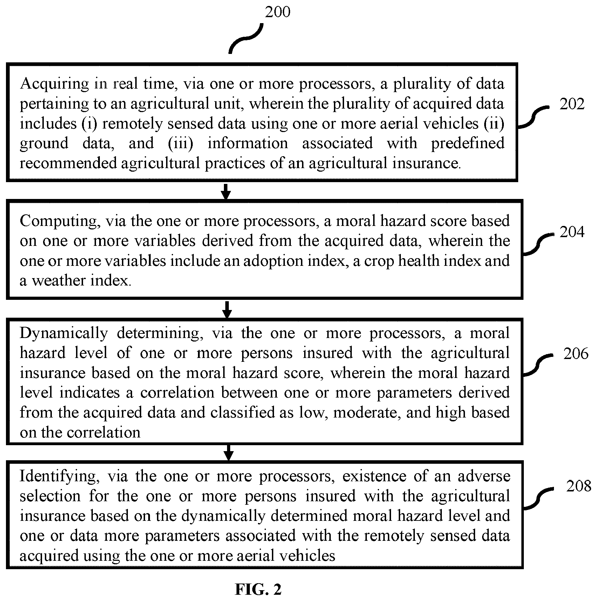

Referring now to the drawings, and more particularly to FIG. 1 and FIG. 2, where similar reference characters denote corresponding features consistently throughout the figures, there are shown preferred embodiments and these embodiments are described in the context of the following exemplary system and/or method.

FIG. 1 illustrates an exemplary block diagram of a system 100 for assessing moral hazard and adverse selection in agricultural insurance according to some embodiments of the present disclosure. In an embodiment, the system 100 includes processor (s) 104, communication interface device(s), alternatively referred as or input/output (I/O) interface(s) 106, and one or more data storage devices or memory 102 operatively coupled to the processor(s) 104. The processor(s) alternatively referred as one or more processors 104 may be one or more software processing modules and/or hardware processors. In an embodiment, the hardware processors can be implemented as one or more microprocessors, microcomputers, microcontrollers, digital signal processors, central processing units, state machines, logic circuitries, component modelers, and/or any devices that manipulate signals/inputs based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server. The I/O interface 106, through the ports can be configured to receive inputs stored external to the system 100.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a data repository 108 for storing data processed, received, and generated as output(s) by the system 100.

The data repository 108, amongst other things, includes a system database. In an embodiment, the data repository 108 may be external (not shown) to the system 100 and accessed through the I/O interfaces 106. The memory 102 may further comprise information pertaining to input(s)/output(s) of each step performed by the processor 104 of the system 100 and methods of the present disclosure. In an embodiment, the system database stores information pertaining to inputs fed to the system 100 and/or outputs generated by the system (e.g., at each stage), specific to the methodology described herein. More specifically, the system database stores information being processed at each step of the proposed methodology.

In an embodiment, the one or more hardware processors 104 can be configured to perform a system for assessing moral hazard and adverse selection in agricultural insurance, which can be carried out by using methodology, described in conjunction with FIG. 2, and use case examples.

FIG. 2 is an exemplary flow diagram illustrating a method 200 for assessing moral hazard and adverse selection in agricultural insurance using the system of FIG. 1, according to some embodiments of the present disclosure. In an embodiment, the system 100 comprises one or more data storage devices or the memory 102 operatively coupled to the one or more processors 104 and is configured to store instructions for execution of steps of the method 200 by the one or more processors 104. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200 depicted in FIG. 2, in an embodiment of the present disclosure, at step 202, the one or more hardware processors 104 are configured to acquire in real time, a plurality of data pertaining to an agricultural unit, wherein the plurality of acquired data includes (i) remotely sensed data using one or more aerial vehicles (ii) ground data, and (iii) information associated with predefined recommended agricultural practices of agricultural insurance units. In the context of the present disclosure, the expression 'agricultural insurance unit' refers to a piece of farm or land insured by an insurance company. In an embodiment, the remotely sensed data, using one or more aerial vehicles, may include but is not limited to geomap of insured agricultural unit, past weather adversities in an area, crops grown, crop health data, agricultural insurance unit agroclimatic zones and its location specific information which is acquired from internet. For example, for any region, based on the agricultural insurance unit size available for a farmer, satellite data is used and type of crop grown on the field for past consecutive years is detected. In addition to this, for each season, level of adoption of farm technologies is planned to be estimated with the help of optimum crop health indices at the agricultural insurance unit level and their level of hazard during a season, before and after calamity is measured quantitatively. In an embodiment, location specific information may further include availability of climate factors such as temperature, rainfall, relative humidity, sun-shine hours, wind velocity, wind direction, seasons and agro-ecological situations data which adds value to farming practices. In an embodiment, the ground data may be acquired using a handheld device or global positioning system (GPS) enabled mobile phone and may include but is not limited to optimum conditions for sowing such as available surface soil moisture for sowing, information about suitability of a land for sowing, crop type, crop health index, weather index and/or the like. In an embodiment, the information associated with predefined recommended agricultural practices of agricultural insurance units includes crop protocols recommended by dynamic crop protocol (DFI) engine of insurance companies or recommend personalized crop protocol advised by insurance companies to the farmers on best crop suited to his/her field as a risk mitigation strategy to minimize loss due to natural events. In an embodiment, the plurality of data which is acquired is stored in a system database comprised in the data repository 108.

Further, in an embodiment of the present disclosure, at step 204, the one or more hardware processors 104 are configured to compute, a moral hazard score based on one or more variables derived from the acquired data. In an embodiment, the one or more variables include an adoption index, a crop health index and a weather index. In an embodiment, the crop health index is determined based on one or more parameters related to crop health in a specific area such as plant density, level of crop health indicators including the NDVI, RVI AND CVI, and/or the like. In an embodiment, the weather index is indicative of presence of weather induced pest and diseases in the agricultural unit. The weather index is dependent on data related to extreme weather conditions and crop damages during a season to assess crop health status pre and post events such as floods, intermittent rainfall, excess rainfall, hailstorm, nature fire, cyclone and/or the like.

In an embodiment, risk of Moral hazard occurs when an insured deliberately alters their behavior to increase the magnitude of potential loss. It is observed based on various studies that moral hazard incentive leads insured farmers to use fewer chemical inputs such as chemical fertilizers, poor quality seeds or plant on marginal lands that are not suitable for certain crops thus making their crops less resilient and productive. Personalized crop protocol is a risk mitigation strategy recommended by the system, which is based on the past historical events and weather adversities occurred in the insurance unit. The insured farmers moral hazard is monitored based on an adoption level of the recommended agricultural practices by the system 100 to the farmers on time. To monitor crop growth of the insured agricultural unit on real time basis, an adoption level, weather parameters, crop growth map that are prepared with help of NDVI and adverse weather index. In an embodiment, pseudo code for computing the moral hazard score which is updated at interval T is provided below:

1. Determining moral hazard score for farm operations denoted by MHSFoP as a function of sowing window, soil moisture, crop health index, weather index and provided below as:

$$MH\ FoP = f\ (Insurance\ unit,\ climate\ factor,\ crop\ type,\ NDVI)$$

Here, sowing Window refers to Early/Mid/Late sowing which is assessed based on surface soil moisture.

2. Determining moral hazard score for calamity denoted by MH Calamity which is updated at interval T and calculated as a function of crop health Index and Weather index and provided below as:

$$\text{MH Calamity Score} = f\ (\text{Crop health: NDVI})$$

In an embodiment, the adoption level refers to degree of actual use of recommended personalized crop protocol by farmers. The adoption level is measured on three-point continuum as full adoption, partial adoption, and non-adoption by assigning a score of 2, 1 and 0, respectively. The adoption score is then converted into adoption index using equation (1) provided as:

$$\text{Adoption index} = \text{Obtained Adoption score} /\ \text{Maximum Obtainable Adoption}$$

$$\text{score x } 100.\ (1)$$

In an embodiment, if the farmer adopts all agricultural practices recommended by the system, then it indicates low moral hazard score. However, if all agricultural practices recommended by the system are not followed by the farmers, then that indicates moral hazard is high, Further, if all agricultural practices recommended by the system are followed by the farmers in a moderate way, then the moral hazard is medium. In an embodiment, if crop health score is positively correlated with weather parameters, then it confirms that farm operations are done in accordance with the agricultural practices recommended by the system. Otherwise it is assumed that the farmer did not perform farm operations. In an embodiment, the adoption index is directly proportional to the crop health index. Table 1 below provides an example for illustrating that the adoption index is directly proportional to the crop health index and classifying the moral hazard level based on adoption index and crop health index.

Table 1

| S.No | Adoption index (AI) | Category in % | Crop health index (NDVI) | Moral Hazard |
|------|--------------------|---------------|--------------------------|--------------|
| 1 | Low | 25-50 | 0-0.33 | High |
| 2 | Medium | 50-70 | 0.33-0.66 | Moderate |
| 3 | High | 75-100 | 0.66-1.00 | Low |

Furthermore, in an embodiment of the present disclosure, at step 206, the one or more hardware processors 104 are configured to dynamically determine a moral hazard level of one or more persons insured with said agricultural insurance based on the moral hazard score. In an embodiment, the moral hazard level indicates a correlation between one or more parameters derived from the acquired data and classified as low, moderate, and high based on the correlation. In an embodiment, the one or more parameters required for classifying the moral hazard level include crop health index, weather index and farm operations of an insured agricultural unit denoted by $p$ in an insured zone denoted by $i$. In an embodiment, steps for determining the moral hazard level is provided below:

1. Determining, crop health index, weather index and corresponding farm operations adopted by the farmer to the insured agricultural unit denoted by '$p$' in the insured zone denoted by $i$. Further, for a good value and bad value of weather index denoted by $\delta$, a correlation between the crop health index, weather index and farm operations is determined using this equation (2) provided below. For example If ($\delta = 1$) which refers to good value of weather index Here, weather is directly influencing factor for the crop growth and development to understand the weather behavior during a season, thus weather pattern is analyzed to calculate weather indices.
Then,

$Ch$= Crop health
$W_i$= Weather index
$F_{ops}$= Farm operations

$$Ch(i, p) + W_i(i, p) + F_{ops}(i, p)\ (2)$$

Equation (1) is a linear equation to assesses Moral hazard in the insured unit. Here, crop heal index is assessed and denoted by NDVI value (+1 or -1). In an embodiment, crop health is determined based on weather and climate prevailed during the season Satellite data helps to determine the crop health, weather pattern on real time basis during the crop growth phase. Further, Equation (3) provided below indicates a condition when crop health and weather are good and farm operations are done by the insured on time. Equation (4) and (5) provided below indicate conditions when crop health is good but either weather was not good or farm operations are not done by the insured farmers.

$$Ch(i,p) = W_i(i,p) = F_{ops}(i,p) \qquad (3)$$

$$Ch(i,p) = W_i(i,p) <= F_{ops}(i,p) \qquad (4)$$

$$Ch(i,p) = W_i(i,p) >= F_{ops}(i,p) \qquad (5)$$

2. Determining Moral hazard level for the farmers based on adoption of recommended crop protocol and adoption level of farm operations recommended by the system is denoted by MH Fops score. Equations (6), (7) and (8) indicate conditions when the insured farmer follows all the practices recommended by the system but there are no weather aberrations in the insured zone. In such conditions, moral hazard based on MH Fops Score is categorized in following manner and insurance claims are settled accordingly
For MH Fops Score

Moral Hazard low

$$Ch(i,p) = W_i(i,p) = F_{ops}(i,p) \qquad (6)$$

Moral Hazard Medium

$$Ch(i,p) =< W_i(i,p) > F_{ops}(i,p) \qquad (7)$$

Moral Hazard High

$$Ch(i,p) =< W_i(i,p) >=< F_{ops}(i,p) \qquad (8)$$

3. Similarly, if any of the calamity like flood, drought, excess rainfall, heat waves, cold waves is assessed using satellite imaginary, then assessment of moral hazard is done instantly. Determining Moral hazard level and classifying using MH Calamity Score using equation (9 ) through (11) as provided below:

Moral Hazard low

$$Ch(i,p) = W_i(i,p) = F_{ops}(i,p) \qquad (9)$$

Moral Hazard Medium

$$Ch(i,p) = W_i(i,p) < F_{ops}(i,p) \qquad (10)$$

Moral Hazard High

$$Ch(i,p) = W_i(i,p) >= F_{ops}(i,p) \qquad (11)$$

Referring back steps of method 200, in an embodiment of the present disclosure, at step 208, the one or more hardware processors 104 are configured to identify existence of an adverse selection for the one or more persons insured with the agricultural insurance based on the dynamically determined moral hazard level and one or more data parameters associated with the remotely sensed data acquired using the one or more aerial vehicles. In an embodiment, the one or more data parameters associated with the remotely sensed data that are used for identifying the existence of an adverse selection may include the GIS information on the agricultural unit deriving insights from satellite data by obtaining geo reference characters. Based on geo location of the agricultural unit and location wise geographical risk, DFI engine recommends personalized and customized crop protocols to an insurer to rid out of risk associated with the agricultural unit. In an embodiment, the adverse selection is identified using remote sensing based on the location of land, and suitability for crop production, prone to calamity and agroclimatic zone. In an embodiment, the adverse selection is indicative of a compliant or a non-compliant status of the predefined recommended agricultural practices of the agricultural insurance units. The personalized crop protocol is the risk mitigation strategy recommended by the system which is based on the past historical events and weather adversities occurred in the insurance unit. The insured farmers insurance is monitored based on the adoption level of the system recommended agricultural practices by the farmers during the crop cycle. In an embodiment, any adverse variations during the crop growth stages is measured and informed to the insurer for non-compliance.

In an embodiment, a risk factor and a claim amount associated with the agricultural insurance of the agricultural unit is determined based on the moral hazard level and the adverse selection. For example, if the moral hazard level associated with farmers is high and adverse selection is present, then claim amount associated with the agricultural insurance is high. Accordingly, the claim premium rates are affected based on the moral hazard level and adverse selection.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The method of the present disclosure is an automated method for assessment of moral hazard and adverse selection in agricultural insurance that assist an insurer, re-insurer with the help of remotely sensed satellite data, ground data in accordance with adoption of crop protocols recommended by the dynamic Crop Protocol (DFI) engine of insurance companies during the crop cycle (CP) and aids to under-write policy effectively and efficiently for determining eligible claim pay out to minimize manual error.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method for agricultural insurance, comprising:

    acquiring in real time (202), via one or more processors, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance;
    computing (204), via the one or more processors, a moral hazard score based on one or more variables derived from the acquired data, wherein the one or more variables include an adoption index, a crop health index and a weather index;
    dynamically determining (206), via the one or more processors, a moral hazard level of one or more persons insured with the agricultural insurance based on the moral hazard score, wherein the moral hazard level indicates a correlation between one or more parameters derived from the acquired data and classified as low, moderate, and high based on the correlation; and
    identifying (208), via the one or more processors, existence of an adverse selection for the one or more persons insured with the agricultural insurance based on the dynamically determined moral hazard level and one or data more parameters associated with the remotely sensed data acquired using the one or more aerial vehicles.

2. The processor implemented method for agricultural insurance as claimed in claim 1, further comprising determining a risk factor and a claim amount associated with the agricultural insurance of the agricultural unit based on the moral hazard level and the adverse selection.

3. The processor implemented method for agricultural insurance as claimed in claim 1, the one or more parameters required for classifying the moral hazard level include crop health index, weather index and farm operations of an insured agricultural unit in an insured zone.

4. The processor implemented method for agricultural insurance as claimed in claim 1, wherein the weather index is indicative of presence of weather induced pest and diseases in the agricultural unit.

5. The processor implemented method for agricultural insurance as claimed in claim 1, wherein the adverse selection is indicative of a compliant or a non-compliant status of the predefined recommended agricultural practices of the agricultural insurance units.

6. A system (100), comprising:

    a memory (102) storing instructions;
    one or more communication interfaces (106); and
    one or more hardware processors (104) coupled to the memory (102) via the one or more communication interfaces (106), wherein the one or more hardware processors (104) are configured by the instructions to:

    acquire in real time, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance;
    compute, a moral hazard score based on one or more variables derived from the acquired data, wherein the one or more variables include an adoption index, a crop health index and a weather index;

dynamically determine, a moral hazard level of one or more persons insured with the agricultural insurance based on the moral hazard score, wherein the moral hazard level indicates a correlation between one or more parameters derived from the acquired data and classified as low, moderate, and high based on the correlation; and

identify existence of an adverse selection for the one or more persons insured with the agricultural insurance based on the dynamically determined moral hazard level and one or more data parameters associated with the remotely sensed data acquired using the one or more aerial vehicles.

7. The system as claimed in claim 6, wherein the one or more hardware processors are configured to determine a risk factor and a claim amount associated with the agricultural insurance of the agricultural unit based on the moral hazard level and the adverse selection.

8. The system as claimed in claim 6, wherein the one or more parameters required for classifying the moral hazard level include crop health index, weather index and farm operations of an insured agricultural unit in an insured zone.

9. The system as claimed in claim 6, wherein the weather index is indicative of presence of weather induced pest and diseases in the agricultural unit.

10. The system as claimed in claim 6, wherein the adverse selection is indicative of a compliant or a non-compliant status of the predefined recommended agricultural practices of the agricultural insurance units.

11. One or more non-transitory computer readable mediums comprising one or more instructions which when executed by one or more hardware processors cause:

acquiring in real time, via one or more processors, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance;

computing, via the one or more processors, a moral hazard score based on one or more variables derived from the acquired data, wherein the one or more variables include an adoption index, a crop health index and a weather index;

dynamically determining, via the one or more processors, a moral hazard level of one or more persons insured with the agricultural insurance based on the moral hazard score, wherein the moral hazard level indicates a correlation between one or more parameters derived from the acquired data and classified as low, moderate, and high based on the correlation; and

identifying, via the one or more processors, existence of an adverse selection for the one or more persons insured with the agricultural insurance based on the dynamically determined moral hazard level and one or data more parameters associated with the remotely sensed data acquired using the one or more aerial vehicles.

12. The one or more non-transitory machine-readable information storage mediums as claimed in claim 11, further comprising determining a risk factor and a claim amount associated with the agricultural insurance of the agricultural unit based on the moral hazard level and the adverse selection.

13. The one or more non-transitory machine-readable information storage mediums as claimed in claim 11, wherein the one or more parameters required for classifying the moral hazard level include crop health index, weather index and farm operations of an insured agricultural unit in an insured zone.

14. The one or more non-transitory machine-readable information storage mediums as claimed in claim 11, wherein the weather index is indicative of presence of weather induced pest and diseases in the agricultural unit.

15. The one or more non-transitory machine-readable information storage mediums as claimed in claim 11, wherein the adverse selection is indicative of a compliant or a non-compliant status of the predefined recommended agricultural practices of the agricultural insurance units.

System 100

Processor 104

I/O interface 106

Memory 102

Data repository 108

**FIG. 1**

200

Acquiring in real time, via one or more processors, a plurality of data pertaining to an agricultural unit, wherein the plurality of acquired data includes (i) remotely sensed data using one or more aerial vehicles (ii) ground data, and (iii) information associated with predefined recommended agricultural practices of an agricultural insurance.

202

Computing, via the one or more processors, a moral hazard score based on one or more variables derived from the acquired data, wherein the one or more variables include an adoption index, a crop health index and a weather index.

204

Dynamically determining, via the one or more processors, a moral hazard level of one or more persons insured with the agricultural insurance based on the moral hazard score, wherein the moral hazard level indicates a correlation between one or more parameters derived from the acquired data and classified as low, moderate, and high based on the correlation

206

Identifying, via the one or more processors, existence of an adverse selection for the one or more persons insured with the agricultural insurance based on the dynamically determined moral hazard level and one or data more parameters associated with the remotely sensed data acquired using the one or more aerial vehicles

208

**FIG. 2**

Europäisches Patentamt
European Patent Office
Office européen des brevets

# EUROPEAN SEARCH REPORT

Application Number

EP 22 19 1438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 242 708 A (ANHUI QIAN MO NETWORK TECH CO LTD) 18 January 2019 (2019-01-18) * paragraph [0001] – paragraph [0005] * ----- | 1–15 | INV. G06Q40/08 G06Q50/02 |
| A | CN 107 909 279 A (ANXIA SYSTEM TECH CHENGDU CO LTD) 13 April 2018 (2018-04-13) * paragraph [0008] * * paragraph [0011] – paragraph [0016] * * paragraph [0044] * * paragraph [0048] – paragraph [0054] * * paragraph [0087] * * paragraph [0099] * * figure 1 * ----- | 1–15 | |

TECHNICAL FIELDS SEARCHED (IPC)

G06Q

The present search report has been drawn up for all claims

| Place of search | Date of completion of the search | Examiner |
|---|---|---|
| Munich | 27 February 2023 | Bharucha, Zubin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 19 1438**

This annex lists the patent family members relating to the patent documents cited in the above-mentioned European search report.
The members are as contained in the European Patent Office EDP file on
The European Patent Office is in no way liable for these particulars which are merely given for the purpose of information.

**27-02-2023**

| Patent document cited in search report | | Publication date | Patent family member(s) | Publication date |
|---|---|---|---|---|
| CN 109242708 | A | 18-01-2019 | NONE | |
| CN 107909279 | A | 13-04-2018 | NONE | |

EPO FORM P0459

**EP 4 174 751 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202121049259